# EUROPÄISCHE PATENTSCHRIFT

(11) **EP 2 672 733 B1**
(45) Veröffentlichungstag und Bekanntmachung des Hinweises auf die Patenterteilung: **20.07.2016**
(21) Anmeldenummer: 13167505.0
(22) Anmeldetag: 13.05.2013
(51) Int. Cl.: H04R 25/00, H01M 2/10, H04R 1/10

(54) **Wiederaufladbarer Batteriepack**
Rechargeable battery pack
Pack de batteries rechargeable

(30) Priorität: 06.06.2012 US 201261656062 P; 14.08.2012 DE 102012214466
(43) Veröffentlichungstag der Anmeldung: 11.12.2013
(73) Patentinhaber: Sivantos Pte. Ltd., Singapore 139959 (SG); Siemens Aktiengesellschaft, 80333 München (DE)
(72) Erfinder: Naumann, Frank, 91052 Erlangen (DE); Gebert, Anton, 91077 Kleinsendelbach (DE); Rabbers, Jacob Johan, 91083 Baiersdorf (DE); Weydanz, Wolfgang, 91054 Buckenhof (DE); Bartulec, Roman, 91077 Kleinsendelbach (DE); Koch, Frank, 91054 Erlangen (DE); Sewiolo, Benjamin, 91315 Höchstadt (DE)
(74) Vertreter: FDST Patentanwälte

(56) Entgegenhaltungen:
- EP-A1- 0 984 664
- EP-A2- 1 962 557
- WO-A1-00/79836
- DE-A1-102009 013 078
- DE-A1-102010 033 679

## Beschreibung

Die Erfindung betrifft einen wiederaufladbaren Batteriepack, oder kurz Akkupack.

Wiederaufladbare Batteriepacks können insbesondere bei mobilen Geräten zum Einsatz kommen. Als mobile Geräte kommen beispielsweise Hörinstrumente in Betracht. Hörinstrumente können beispielsweise als Hörgeräte ausgeführt sein. Ein Hörgerät dient der Versorgung einer hörgeschädigten Person mit akustischen Umgebungssignalen, die zur Kompensation bzw. Therapie der jeweiligen Hörschädigung verarbeitet und verstärkt sind. Es besteht prinzipiell aus einem oder mehreren Eingangswandlern, aus einer Signalverarbeitungseinrichtung, einer Verstärkungseinrichtung, und aus einem Ausgangswandler. Der Eingangswandler ist in der Regel ein Schallempfänger, z.B. ein Mikrofon, und/oder ein elektromagnetischer Empfänger, z.B. eine Induktionsspule. Der Ausgangswandler ist in der Regel als elektroakustischer Wandler, z. B. Miniaturlautsprecher, oder als elektromechanischer Wandler, z. B. Knochenleitungshörer, realisiert. Er wird auch als Hörer oder Receiver bezeichnet. Der Ausgangswandler erzeugt Ausgangssignale, die zum Gehör des Patienten geleitet werden und beim Patienten eine Hörwahrnehmung erzeugen sollen. Der Verstärker ist in der Regel in die Signalverarbeitungseinrichtung integriert. Die Stromversorgung des Hörgeräts erfolgt durch eine ins Hörgerätegehäuse integrierte Batterie. Die wesentlichen Komponenten eines Hörgeräts sind in der Regel auf einer gedruckten Leiterplatine als Schaltungsträger angeordnet bzw. damit verbunden.

Hörinstrumente können außer als Hörgeräte auch als sogenannte Tinnitus-Masker ausgeführt sein. Tinnitus-Masker werden zu Therapie von Tinnitus-Patienten eingesetzt. Sie erzeugen von der jeweiligen Hörbeeinträchtigung und je nach Wirkprinzip auch von Umgebungsgeräuschen abhängige akustische Ausgangssignale, die zur Verringerung der Wahrnehmung störender Tinnitus- oder sonstiger Ohrgeräusche beitragen können.

Hörinstrumente können weiter auch als Telefone, Handys, Headsets, Kopfhörer, MP3-Player oder sonstige Telekommunikations- oder Unterhaltungselektronik-Systeme ausgeführt sein.

Hörinstrumente werden bislang üblicherweise mit nicht wiederaufladbaren Batterien betrieben. Häufig werden Batterien auf Basis von Zn-Luft-Zellen eingesetzt, die eine hohe Energiedichte aufweisen. Die Energieversorgung samt Batterie selbst ist in das Hörinstrument integriert. Im Hörinstrument ist die Batterie durch eine Tür oder Klappe abgedeckt und dadurch von der Umwelt abgeschirmt. Durch die Tür oder Klappe hindurch kann die Batterie eingelegt und entnommen werden. Im Hörinstrument sind elektrische Kontakte vorgesehen, die die Batterie kontaktieren. Diese werden in einen Halter geklemmt und nicht fest mit dem Hörinstrument verbunden. Da diese Tür jedoch nicht vollkommen dicht schließt, können Verunreinigungen, Feuchtigkeit und vor allem auch chemisch agressives Ohrschmalz in das Batteriefach und damit in das Hörinstrument gelangen und dort Korrosion oder andere Probleme verursachen.

Leider muss die Batterie oft getauscht werden, vielfach schon nach wenigen Tagen. Dies ist, gerade für ältere Nutzer, ein Problem bzw. eine Frage der Bequemlichkeit. Deshalb wird an wiederaufladbaren Batterielösungen für Hörinstrumente gearbeitet. Beispielsweise ist bereits ein Produkt mit einem NiMH-Akku im Markt erhältlich. NiMH-Zellen haben den Vorteil, dass sie das gleiche Spannungslevel (1.2V) besitzen wie die üblichen nicht wiederaufladbaren Batterien, und das der Formfaktor der Gleiche ist. Somit kann der Benutzer frei zwischen Batterie und Akku wählen. Ein großer Nachteil der NiMH-Akkus ist aber, dass diese nur eine verhältnismäßig kurze Lebensdauer haben, dass ihre Kapazität begrenzt ist, und dass sie empfindlich hohe Temperaturen beim Laden reagieren. Wegen der genannten Schwierigkeiten muss ein Wechsel der Batterie weiterhin ermöglicht sein, was ein öffenbares und damit nicht vollkommen dichtes Batteriefach erforderlich macht.

Die Anforderungen an die Größe (speziell Dicke) der Batterie sind bei mobilen Geräten, insbesondere bei Hörinstrumenten, sehr strikt. Dagegen ist die Laufzeit abzuwägen, die bei Hörinstrumenten mindestens einen Tag mit 16-20 Stunden - idealerweise mehr - betragen sollte. Um die Größenvorgaben einzuhalten, müssen alle Teile der Energieversorgung so optimal wie möglich aufeinander abgestimmt werden. Dies betrifft insbesondere die Batterie selbst, da diese beträchtlich zur Gesamtgröße der Energieversorgung beiträgt, und gilt gleichermaßen für wiederaufladbare Batterien.

Die vorangehenden Ausführungen sind zwar großenteils auf Hörinstrumente bezogen. Sie gelten jedoch analog auch für andere mobile Geräte, in denen die Größe des Batteriepacks minimiert werden muss, und sind nicht auf Hörinstrumente beschränkt. Im folgenden sollen daher unter dem Begriff mobiles Gerät unter anderem Hörinstrumente, vergleichbare Geräte, sowie Telekommunikations- und Unterhaltungselektronik-Systeme verstanden werden. Die vorangehenden Ausführungen gelten darüber hinaus auch für sonstige batteriebetriebene Geräte, in denen die Größe des Batteriepacks minimiert werden muss.
Aus dem Artikel
   **"**NTT Docomo's New Smartphone, Charger Can Be Wirelessly Charged" May 17, 2011, Kouji Kariatsumari, Nikkei Electronics (http://techon.nikkeibp.co.jp/english/NEWS_EN/20110517/19 1823/)
und aus dem Produktangebot
   Jhih hong technology Co Ltd, Wireless Battery Pack & Charger for iPhone 3G/3GS (http://www.jht-energy.com/style/content/CN-09-2a/product_detail.asp?lang=2&customer_id=2255&name_id=965 67&rid=56802&id=318528#iphone3G)
sind kabellos wiederaufladbare Akkupacks bekannt. Über die integrierten elektronischen Komponenten und Betriebsspannungen ist wenig offenbart. Die Akkupacks sind verhältnismäßig groß.

Aus der Druckschrift WO 00/79836 A1 ist ein Hörgerät bekannt, bei dem anstelle einer herkömmlichen Batterie ein Akkumulator samt Antenne zum Empfang von Ladeenergie, Ladeschaltung und Ausgangssignalschaltung eingesetzt werden kann. Der Akkumulator wird mithilfe eines Zusatzmoduls eingesetzt, das anstelle der herkömmlichen Batterie aufgesteckt wird.

Aus der Druckschrift DE 10 2010 033 679 A1 ist ein Akkumulator samt Empfangsspule zum Empfang von Ladeenergie, Ladeschaltung und Ausgangssignalschaltung bekannt, der eine herkömmliche Batterie ersetzen soll. Die Empfangsspule ist als Drahtwicklung zum induktiven Empfang ausgeführt.

Aus der Druckschrift EP 0 984 664 A1 ist ein Implantat mit kabellos wiederaufladbarem Akkumulator bekannt. Die hierfür vorgesehene Empfangsspule ist außerhalb des Akkumulator-Gehäuses angeordnet.

Aus der Druckschrift EP 1 962 557 A2 ist eine Hörvorrichtung bekannt, bei der ohnehin in der Hörvorrichtung vorhandene Komponenten, beispielsweise die Telefonspule, zur Energieeinspeisung für einen Akkumulator verwendet werden sollen.

Aus der Druckschrift DE 10 2009 013 078 A1 ist ein Herstellungsverfahren für einen Lautstärkesteller einer Hörvorrichtung bekannt. Das Herstellungsverfahren basiert auf einem Spritzgussverfahren.

Die Aufgabe der Erfindung besteht darin, eine Energieversorgung für batteriebetriebene Geräte, beispielsweise Hörinstrumente, anzugeben, die auf einer wiederaufladbaren Batterie basiert und eine geringe Baugröße bei gleichzeitig hoher Energiedichte aufweist. Neben der Größe soll auch ein vorgegebener Formfaktor einhaltbar sein. Die Energieversorgung soll eine hohe Zuverlässigkeit und Alltagstauglichkeit aufweisen und dabei insbesondere gegen Feuchtigkeit und Verunreinigungen geschützt sein. Sie soll flexibel gestaltbar sein, so dass sie als Ersatz für verschiedene andere Batteriesysteme ausgebildet werden kann.

Die Erfindung löst diese Aufgabe durch einen Akkupack mit den Merkmalen des unabhängigen Patentanspruchs 1.

Ein Grundgedanke der Erfindung besteht in einem Akkupack, umfassend mindestens eine wiederaufladbare Batteriezelle, eine Ladeelektronik zum Aufladen der mindestens einen Batteriezelle, eine Nutzsignalelektronik zum Erzeugen eines Nutzsignals, mindestens zwei Nutzsignalkontakte zum Abgeben des Nutzsignals, und eine Kapselung zum Schutz gegen das Eindringen von Feuchtigkeit und Verunreinigungen. Die Nutzsignalelektronik transformiert eine Ausgangsspannung der Batteriezelle in eine vorbestimmte Nutzspannung, und die Nutzspannung wird durch die zwei Nutzsignalkontakte außerhalb der Kapselung verfügbar gemacht. Der Akkupack umfasst eine flächig erstreckte Antenne zum kabellosen Energieempfang, die mindestens eine Batteriezelle ist flächig erstreckt, und die Antenne und die mindestens eine Batteriezelle sind übereinander angeordnet. Damit wird eine flache Bauform des Akkupacks, wie vorangehend erläutert in Anlehnung an weithin übliche herkömmliche Batterieformen, begünstigt.

Die Transformation der Nutzspannung durch die Nutzsignalelektronik ermöglicht es, beliebige Batteriesysteme mit unterschiedlichsten Batterie- bzw. Zell-Spannungen einzusetzen, da die Nutzsignalelektronik unabhängig davon die erforderliche Nutzspannung, auch als Betriebsspannung zu bezeichnen, erzeugen kann. Damit können beispielsweise Li-Ionen-Batteriesysteme, die in der Regel mit 3,7 Volt Spannung arbeiten, auch in Hörinstrumenten eingesetzt werden, die in der Regel mit einer Betriebsspannung von 1,2 Volt arbeiten.

Die Kapselung des Akkupacks ist in diesem Zusammenhang gerade bei Hörinstrumenten besonders vorteilhaft, da dort erfahrungsgemäß die Korrosions-Neigung mit steigender Spannung überproportional zunimmt. Durch die Kapselung wird es ermöglicht, Komponenten mit erhöhter Betriebsspannung, z.B. 3,7 Volt bei Li-Ionen-Batteriesystemen, vollständig zu kapseln, so dass außerhalb der Kapselung durchgängig lediglich die Betriebsspannung von 1,2 Volt anliegt.

Die Konzeption des Akkupacks ermöglicht es, unterschiedlichste Batteriesysteme über die Elektronik so zu integrieren, dass nach außen nahezu beliebige Nutzsignale und Formfaktoren einhaltbar sind. Sollten sich Batteriesysteme als ausreichend zuverlässig, alltagstauglich und langzeitstabil erweisen, um während der gesamten Lebensdauer eines Hörinstruments verwendet zu werden, würde mit solchen Batteriesystemen ein Wechsel des Akkupacks hinfällig werden. Dies würde es vorteilhaft ermöglichen, die Öffnung zum Wechsel des Akkupacks entfallen zu lassen. Dadurch würde die Dichtigkeit verbessert. Außerdem könnte die anfällige und komplizierte Mechanik der Batterie-Tür oder -Klappe entfallen.

Eine vorteilhafte Ausgestaltung besteht darin, dass die mindestens eine Batteriezelle, die Ladeelektronik und die Nutzsignalelektronik zur Einhaltung einer vorbestimmten maximalen Höhe des Akkupacks in einer Fläche nebeneinander angeordnet sind. Dies ermöglicht die Einhaltung von Anforderungen, die insbesondere aus der Höhe eines Batteriefachs resultieren. Solche Anforderungen können unter anderem daher rühren, dass weithin verwendete herkömmliche Batterien häufig eine flache Form aufweisen, woran die Batteriefächer selbstredend angepasst sind. Ein gleichermaßen flacher Akkupack ermöglicht somit den Austausch gegen weithin verwendete herkömmliche Batterietypen und erhöht damit die Einsetzbarkeit und Flexibilität in der Verwendung.

Eine weitere vorteilhafte Ausgestaltung besteht darin, dass die Antenne mittels elektrischer Antennenkontakte mit der Ladeelektronik verbunden ist, und dass die elektrischen Antennenkontakte und die Antenne in einer Fläche nebeneinander angeordnet sind. Die Anordnung der Antennenkontakte flächig neben der Antenne begünstigt zusätzlich die insgesamt flache Bauform. Im Gegensatz dazu würden über der Antenne liegende Antennenkontakte, beispielsweise als Kontaktfahnen ausgeführt, eine nennenswert erhöhte Bauhöhe zur Folge haben.

Eine weitere vorteilhafte Ausgestaltung besteht darin, dass die Antenne in einer Fläche neben den Kontakten, welche die wiederaufladbare Batterie kontaktieren, angeordnet ist. Die Anordnung der Batteriekontakte flächig neben der Antenne begünstigt zusätzlich die insgesamt flache Bauform. Im Gegensatz dazu würden über der Antenne liegende Batteriekontakte, beispielsweise als Kontaktfahnen bzw. Schweißfahnen ausgeführt, eine nennenswert erhöhte Bauhöhe zur Folge haben.

Eine weitere vorteilhafte Ausgestaltung besteht darin, dass der Akkupack eine Abschirmung gegen elektromagnetische Signale umfasst, die einen flächig erstreckten Abschnitt aufweist, der zwischen der Antenne und der mindestens einen Batteriezelle angeordnet ist, und einen daran anschließenden, quer zur flächigen Erstreckung erstreckten Abschnitt, der seitlich um die mindestens eine Batteriezelle herum angeordnet ist. Die flächige, zwischen Antenne und Batteriezelle(n) liegende Abschirmung verhindert das Eindringen von elektromagnetischen Lade-Wechselfeldern, beispielsweise Induktionsfeldern, mit denen Ladeenergie an die Antenne übertragen wird, in die Batterie. Dies ist vorteilhaft, da ansonsten ungewollt Wirbelströme (Eddy-Ströme) induziert und dadurch eine schädliche Erwärmung der Batterie bewirkt würde. Es hat sich darüber hinaus gezeigt, dass die zusätzliche, die Batterie seitlich umschließende Abschirmung zu einer weiteren, erheblichen Reduzierung der schädlichen Eddy-Ströme in der Batterie beiträgt. Damit wird die Erwärmung der Batterie durch elektromagnetische Lade-Wechselfelder erheblich reduziert.

Eine weitere vorteilhafte Ausgestaltung besteht darin, dass der Akkupack mindestens teilweise in MID-Technik aufgebaut ist. MID-Technik ermöglicht es vorteilhaft, die erforderlichen dreidimensionalen Geometrien von Kapselung und elektrischen Leitungen und Komponenten unaufwändig und auf kleinem Raum aufzubauen.

Weitere Vorteile und Weiterbildungen ergeben sich aus den abhängigen Patentansprüchen und aus der nachfolgenden Beschreibung von Ausführungsbeispielen und Figuren. Es zeigen:
- Fig. 1: Akkupack mit Antenne und Nutzsignalkontakten
- Fig. 2: Explosionszeichnung Akkupack
- Fig. 3: Akkupack mit Rastnase
- Fig. 4: Akkupack mit Flachstecker
- Fig. 5: Akkupack mit Rastnasen
- Fig. 6: Akkupack mit Drehführung
- Fig. 7: Akkupack mit Rastung samt Anschlusselement
- Fig. 8: Akkupack mit Dreh-Rastung samt Anschlusselement
- Fig. 9: Akkupack mit Dreh-Achse und Rastung samt Anschlusselement
- Fig. 10: Akkupack mit Schwalbenschwanz-Verbindung samt Anschlusselement
- Fig. 11: Anschlusselement mit Federkontakten
- Fig. 12: Akkupack mit Steckkontakt
- Fig. 13: Anschlusselement mit Steckkontakt
- Fig. 14: Anschlusselement mit Pogo-Pin-Kontaken
- Fig. 15: Akkupack in MID-Technik
- Fig. 16: Passive Gehäusehälfte Akkupack in MID-Technik
- Fig. 17: Gehäusehälfte mit Batteriekontakt Akkupack in MID-Technik
- Fig. 18: Gehäusehälfte mit Anschlusskontakt Akkupack in MID-Technik
- Fig. 19: Schema Hörinstrument, Akkupack und Ladegerät
- Fig. 20: Integration von Komponenten im Akkupack

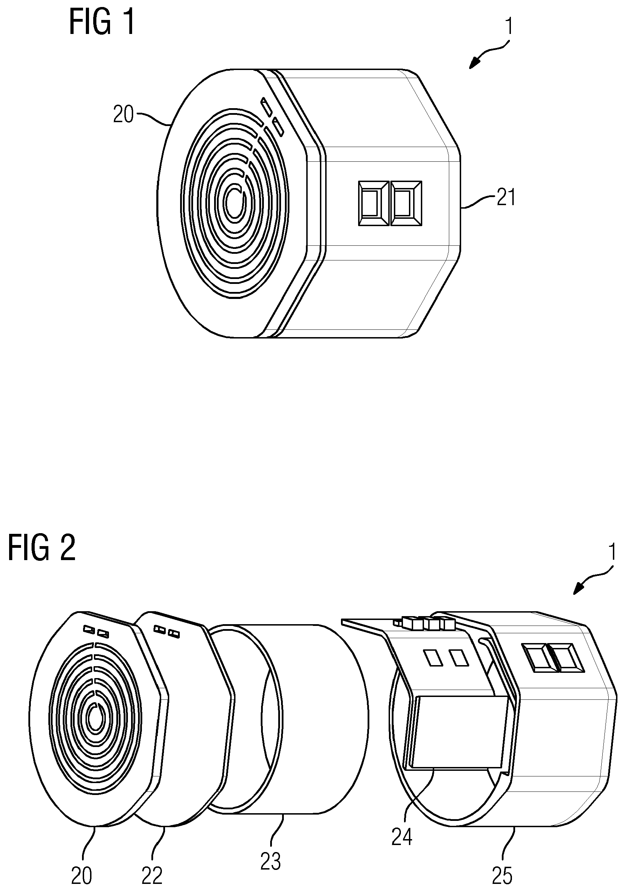

In **Figur 1** ist ein Akkupack 1 mit Antenne 20 und Nutzsignalkontakten 21 perspektivisch dargestellt. Die Antenne 20 dient dem Empfangen von Ladeenergie, die mittels elektromagnetischer Wechselfelder, vorzugsweise induktiv, übertragen wird. Im Akkupack 1 befindet sich eine wiederaufladbare Batterie, vorzugsweise auf Basis von Lithium-Ionen-Technik. Ebenfalls in der Akkupack 1 integriert sind eine Ladeelektronik sowie eine Nutzsignalelektronik, die ein vorbestimmtes Nutzsignal, beispielsweise mit vorbestimmter Nutzspannung, an den Nutzsignalkontakten 21 zur Verfügung stellt.

In **Figur 2** ist der Akkupack 1 als Explosionszeichnung dargestellt. In der Kapselung 25, die mit Ausnahme von zwei Öffnungen für die Nutzsignalkontakte zum Schutz gegen Feuchtigkeit und Verunreinigungen dicht ist, sind die weiteren Komponenten des Akkupacks 1 angeordnet. Eine flexible Leiterplatte trägt die Elektronik 24, welche u.a. eine Ladeelektronik, eine Nutzsignalelektronik sowie elektronische Bauteile zum Empfang von Ladeenergie über die Antenne 20 umfasst. Die flexible Leiterplatte ist platzsparend an die Innenwand der Kapselung 25 angelegt. Von der Elektronik 24 und der Kapselung 25 umgeben ist eine wiederaufladbare Batterie 23. Über der wiederaufladbaren Batterie 23 befindet sich eine Abschirmung 22 und hierüber die Antenne 20. Die Abschirmung 22 verhindert, dass elektromagnetische Wechselfelder, insbesondere für die Übertragung von Ladeenergie, von der Antenne 20 zur Batterie 23 durchdringen. Andernfalls würden solche Wechselfelder nachteiligerweise durch Wirbelströme (Eddy-Ströme) eine unerwünschte Erwärmung der Batterie 23 bewirken, die sich nachteilig auf den Ladevorgang sowie die Batteriechemie auswirken kann.

Außer der Abschirmung 22 ist eine weitere Abschirmung gegen elektromagnetische Wechselfelder in der umlaufenden Seitenwand der Abkapselung 25 enthalten, die jedoch in der Abbildung nicht separat dargestellt sondern in die Abkapselung 25 ist. Dabei kann es sich um eine in der Kapselung 25 angeordnete, beispielsweise metallische, Abschirmschicht handeln. Es besteht auch die Möglichkeit, dass die Kapselung 25 aus einem abschirmenden Material gefertigt ist. Weiter kann die Kapselung 25 auf Basis eines Kunststoffmaterials gefertigt sein, das eine geeignete Füllung aufweist, um die gewünschte Abschirmung zu erreichen.

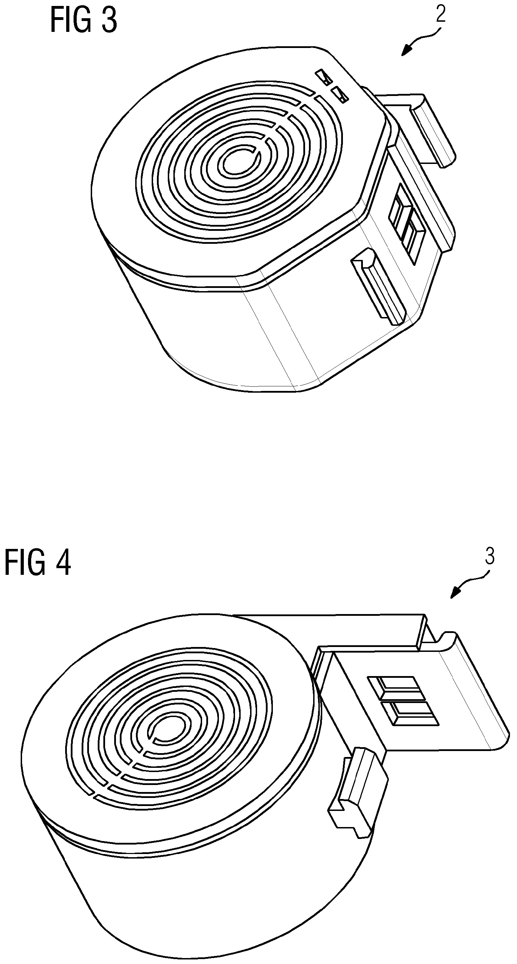

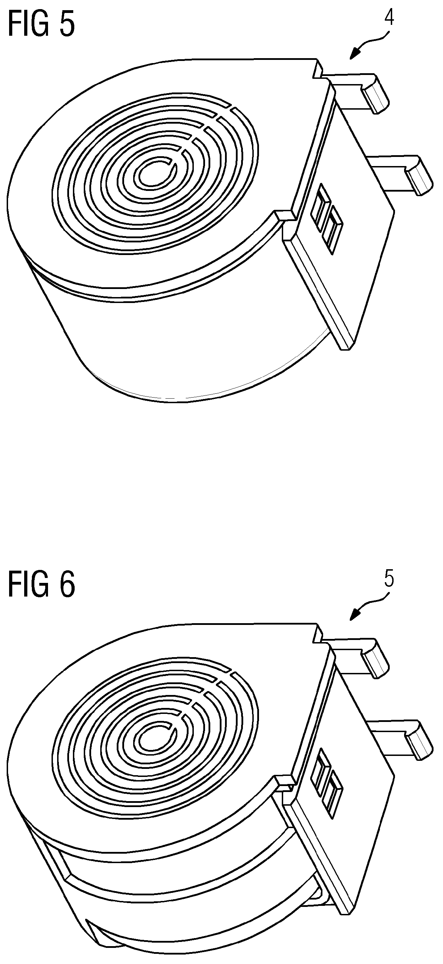

In Figuren 3-6 sind verschiedene Gehäuseformen eines wie vorangehend erläutert ausgeführten Akkupacks dargestellt. Der in **Figur 3** dargestellte Akkupack 2 weist zwei Rastnasen zum Einrasten im Batteriefach eines batteriebetriebenen Gerätes, insbesondere eines Hörinstruments, auf. Die Rastnasen bewirken dabei eine mechanische Rastung, während die zwischen den Rastnasen angeordneten Nutzsignalkontakte die elektrische Kontaktierung bewirken. Der in **Figur 4** dargestellte Akkupack 3 weist einen als Flachstecker ausgeführten Steckkontakt auf. Der Steckkontakt umfasst dabei eine mechanisch stabile Konstruktion, die der mechanischen Befestigung dient. Im Flachstecker angeordnet sind die Nutzsignalkontakte, die der elektrischen Kontaktierung des Akkupacks 3 dienen. Der in **Figur 5** dargestellte Akkupack 4 weist Rastnasen auf, die zunächst auf einer Seite eingehängt werden, wobei die andere Seite anschließend durch Rotation um die bereits eingehängte Seite einrastet. Der in **Figur 6** dargestellte Akkupack 5 weist einseitig eine in der Abbildung unten dargestellte Drehlagerung auf, um die herum die Rastnasen in die Rastposition eingeklickt werden.

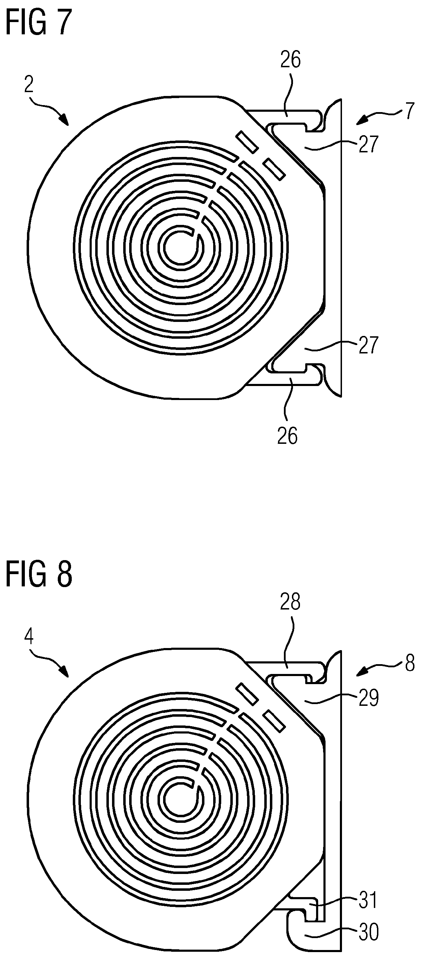

In **Figur 7** ist der Akkupack 2 in Draufsicht dargestellt. Der Querschnitt der Rastnasen 26 ist erkennbar. Der Akkupack ist in das Anschlusselement 7 eines batteriebetriebenen elektrischen Geräts eingerastet. Dazu greifen die Rastnasen 26 in die Rasten 27 ein. Die zwischen den Rastnasen 26 angeordneten elektrischen Nutzsignalkontakte sind in der Draufsicht nicht erkennbar. In der eingerasteten Position sind sie mit entsprechenden elektrischen Kontakten des Anschlusselements 7 verbunden.

In **Figur 8** ist der Akkupack 4 in Draufsicht dargestellt. Er ist in das Anschlusselement 8 eines batteriebetriebenen Geräts eingerastet. Die Rastnase 28 ist erkennbar in die Raste 29 eingeklickt. Die Rastnase 31 ist ihrerseits in die Raste 30 eingelegt. Zum Lösen des Akkupacks 4 muss zunächst die Rastnase 28 aus der Raste 29 gelöst und sodann der Akkupack 4 um die Raste 30 herum vom Anschlusselement 8 weggeschwenkt werden. Durch die Schwenkbewegung gibt die Raste 30 die Rastnase 31 frei. Das Einrasten des Akkupacks 4 ins Anschlusselement 8 erfolgt sinngemäß umgekehrt.

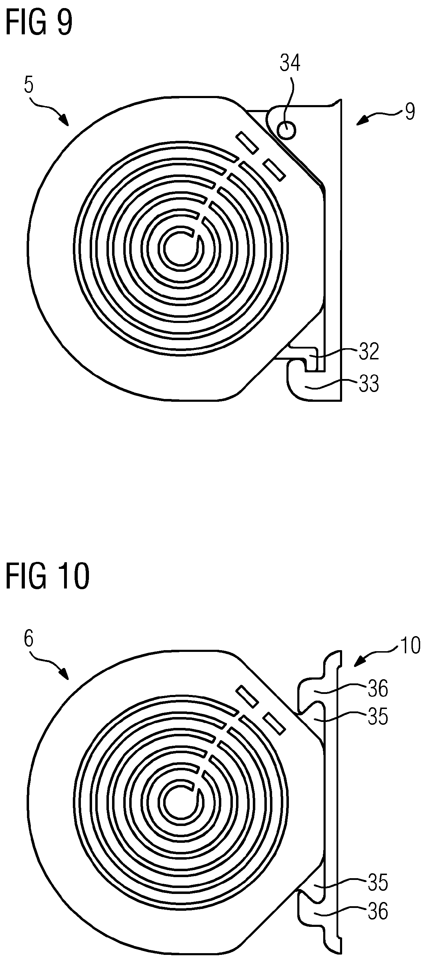

In **Figur 9** ist der Akkupack 5 in Draufsicht dargestellt. Er ist in ein Anschlusselement 9 eingerastet. Der Akkupack 5 ist einseitig durch eine Achse 34 im Anschlusselement 9 gelagert. Um die Achse 34 herum ist er mit der Rastnase 32 in die Raste 33 hineingeschwenkt und eingeklickt. Zum Lösen des Akkupacks muss umgekehrt die Rastnase 32 aus der Raste 33 gelöst und der Akkupack 5 vom Anschlusselement 9 weggeschwenkt werden.

In **Figur 10** ist ein Akkupack 6 mit einer weiteren mechanischen Verbindungsform, einer Schwalbenschwanzverbindung, mit dem Anschlusselement 10 verbunden. Der Akkupack 6 weist einen Schwalbenschwanz 35 auf, der in eine entsprechende Schwalbenschwanzführung 36 des Anschlusselements 10 eingeschoben wird. Die Einschiebebewegung erfolgt in der gewählten Darstellung senkrecht zur Zeichnungsebene, d.h. in diese hinein oder aus dieser heraus.

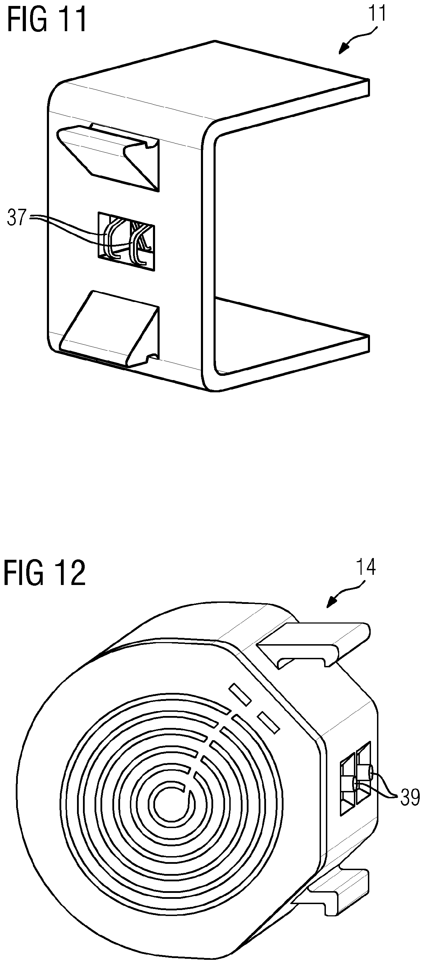

In **Figur 11** ist ein Anschlusselement 11 eines batteriebetriebenen elektrischen Geräts dargestellt. Das Anschlusselement 11 dient dem Anschließen und der Verbindung mit einem in der Abbildung nicht dargestellten Akkupack. Zwischen den wie vorangehend erläutert ausgeführten Rasten befinden sich zwei elektrische Kontakte zur Kontaktierung der Nutzsignalkontakte eines Akkupacks. Die Kontakte sind als Federkontakte 37 ausgeführt. Je nach Bedarf können statt zwei auch mehr Kontakte vorgesehen sein, beispielsweise je zwei + und - Pole bei verschiedenen Spannungen, außerdem auch Kontakte zur Signalübertragung.

In **Figur 12** ist eine weitere Ausführungsform eines Anschlusselements 12 dargestellt, sowie ein dazu passend ausgeführter Akkupack 14. Es ist eine wie vorangehend erläutert ausgeführte mechanische Rastung vorgesehen, in deren Zentrum ein elektrischer Steckkontakt zur elektrischen Kontaktierung der Nutzsignalkontakte des Akkupacks 14 angeordnet ist. Der elektrische Steckkontakt umfasst eine Buchse 38 am Anschlusselement 12 sowie Steckstifte 39 auf Seiten des Akkupacks 14. Die Steckstifte 39 sind so angeordnet und geformt, dass sie eine Steckverbindung mit der Buchse 38 eingehen, sobald der Akkupack 14 am Anschlusselement 12 eingerastet wird.

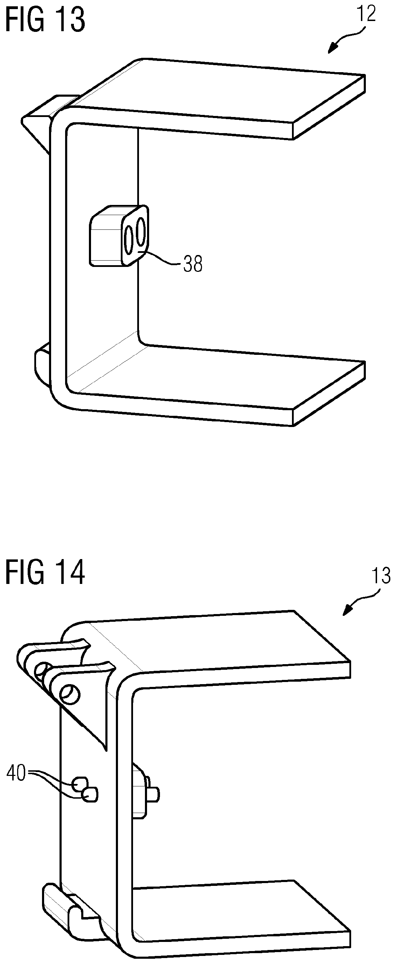

In **Figur 13** ist ein weiteres Anschlusselement 13 ausgeführt. Es weist eine wie vorangehend erläutert ausgeführte Achs-Rast-Verbindung zum Einrasten eines nicht dargestellten Akkupacks auf. Im Zentrum der mechanischen Rastanordnung sind zur Kontaktierung der Nutzsignalkontakte eines Akkupacks zwei Pogo-Pins 40 als elektrische Kontakte angeordnet.

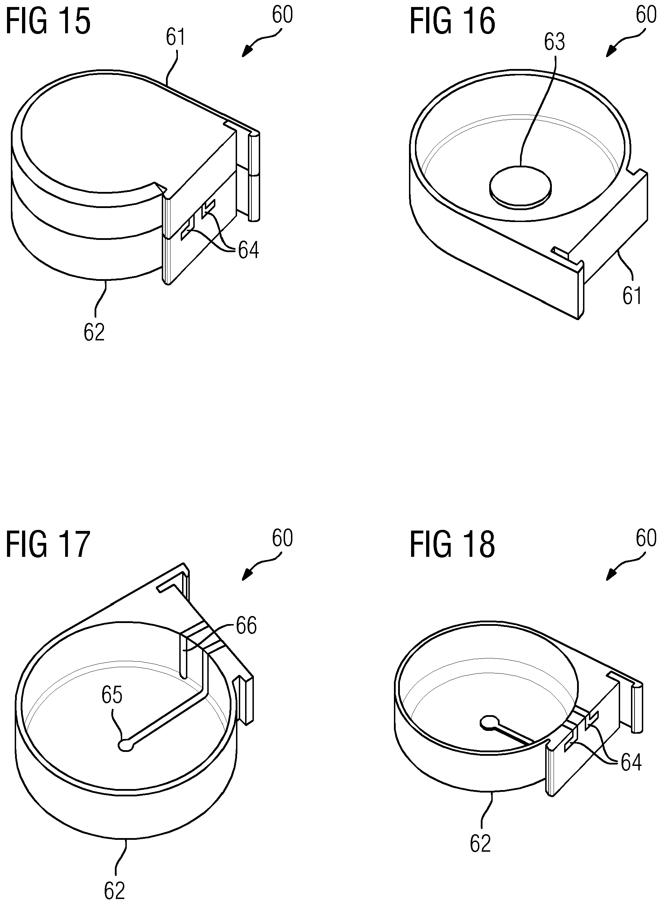

In **Figure 15** ist eine Kapselung 60 des Akkupacks schematisch dargestellt. Die in **Figuren 17 und 18** dargestellte Kapselungs-Hälfte 62, die die elektronischen Komponenten trägt, ist in MID-Technik ausgeführt. Schematisch dargestellt sind der Plus- und Minus-Kontakt zur Kontaktierung der wiederaufladbaren Batterie sowie die elektrischen Nutzsignalkontakte zum Anschluss an ein batteriebetriebenes Gerät. In der in **Figur 16** dargestellten gegenüberliegenden Kapselungs-Hälfte 61 ist ein Schaumstoffkörper 63 mittig angeordnet, der dazu dient, eine in die Kapselung 60 einzulegende Batterie elastisch auf den Batteriekontakt (den Minus-Kontakt) zu drücken.

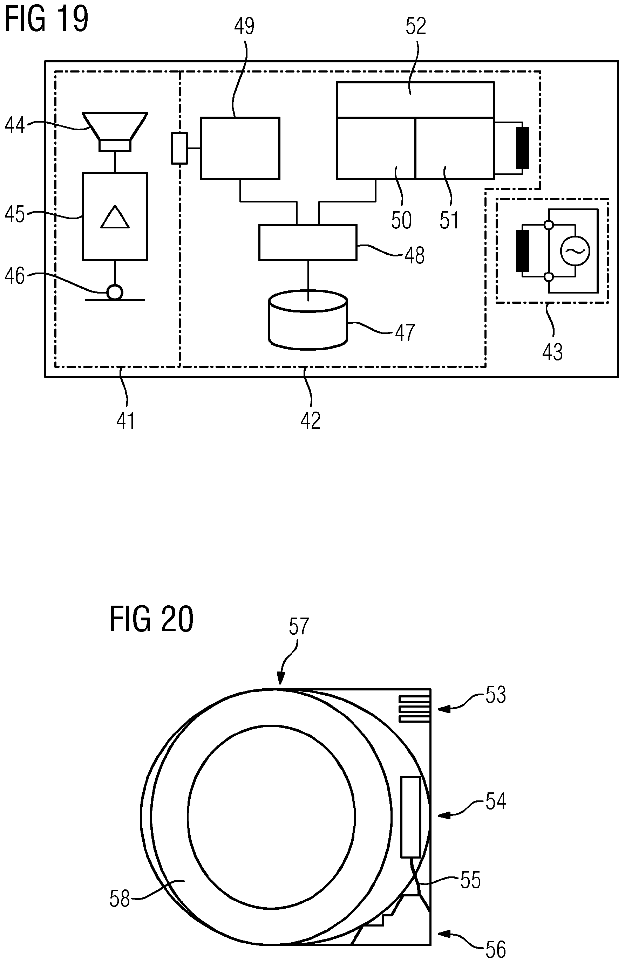

In **Figur 19** sind die elektronischen Komponenten eines Hörinstruments, eines wie vorangehend erläutert ausgeführten Akkupacks 42, sowie eines kabellosen Ladegeräts 43 schematisch dargestellt. Das Hörinstrument 41 weist als wesentliche Komponenten eine Mikrofonanordnung 46, eine damit verbundene Signalverarbeitungseinrichtung 45, sowie einen damit verbundenen Receiver 44 auf.

Das Hörinstrument 41 erhält die erforderliche Betriebsspannung vom Akkupack 42. Der Akkupack 42 umfasst eine wiederaufladbare Batterie 47, die durch eine Schutzelektronik 48 geladen und entladen wird. Die Schutzelektronik hat die Aufgabe, ein schädliches Überladen der Batterie 47 zu verhindern. Ebenso verhindert sie schädliches Tiefentladen der Batterie 47.

Weiter umfasst der Akkupack 42 eine Nutzsignalelektronik 49. Die Nutzsignalelektronik 49 dient dazu, an den Nutzsignalkontakten die für das Hörinstrument 41 erforderliche Versorgungsspannung bzw. Betriebsspannung zur Verfügung zu stellen. Beispielsweise kann die wiederaufladbare Batterie 47 als Li-Ionen-System ausgeführt sein, das mit einer Betriebsspannung von 3,7 V arbeitet. In diesem Fall hat die Nutzsignalelektronik 49 die Aufgabe, die Spannung auf die für das Hörinstrument 41 erforderliche Betriebsspannung von 1,2 V herunter zu transformieren. Je nach verwendeten Batteriesystem und zu versorgendem batteriebetriebenen Gerät kann die Nutzsignalelektronik 49 auch zur Ausführung anderer Transformationen ausgebildet sein.

Der Akkupack 42 umfasst weiter eine Ladeelektronik 50, die die erforderliche Ladeenergie von einem Ladeenergie-Empfänger 51 erhält. Der Ladeenergie-Empfänger 51 umfasst zu diesem Zweck eine Antenne zum kabellosen Energie-Empfang. Ein Mikrocontroller 52 steuert Empfang und Ladevorgang. Die beschriebenen elektronischen Komponenten sind in den Akkupack 42 platzsparend und nach außen abgekapselt und abgeschirmt integriert.

Ein kabelloses Ladegerät 43 stellt die zum Aufladen des Akkupacks 42 erforderliche Energie kabellos zur Verfügung.

Für die Herstellung eines solchen Akkupacks sind verschiedene Herstellungsverfahren denkbar. In einer ersten Ausführungsform werden die Komponenten des Akkupacks zur Fixierung beispielsweise mit einem elektrisch nicht leitenden Lack verklebt. Dies gilt zumindest für die Nutzsignalelektronik, die Ladeelektronik, den Ladeenergie-Empfänger sowie den Mikrocontroller und die Schutzschaltung. Die wiederaufladbare Batterie kann entweder mit verklebt werden, oder sie kann in einem weiteren Herstellungsschritt hinzugefügt und verklebt oder durch Spritzguß oder Vergießen fixiert werden.

In jedem Fall ist darauf zu achten, dass die Batterie selbst nicht komplett verklebt wird, sondern Gaskanäle geöffnet bleiben, die bei sicherheitskritischem Verhalten, wie z.B. Öffnen der Batteriezelle, eine kontrollierte Reaktion, beispielsweise Druckabbau zulassen. Ist die Batterie stattdessen komplett verklebt, kann es zu einem unerwünschten Druckaufbau und einer nachfolgenden unkontrollierten, sicherheitskritischen Reaktion kommen.

In einer zweiten Ausführungsform kann der gesamte Akkupack oder auch lediglich die Elektronikkomponenten mittels Spritzguss, beispielsweise Injection Molding, schnell und kostengünstig verspritzt werden, um ein Gehäuse auszuformen. Dabei werden alle Teile von der Verspritzmasse umschlossen und somit geschützt. Dabei ist wie vorangehend erläutert darauf zu achten, dass der Akku selbst nicht komplett verklebt oder verspritzt wird, sondern Gaskanäle geöffnet bleiben.

In einer dritten Ausführungsform kann ein Vergießen des Akkupacks mit einem Teil oder allen seinen Komponenten mit einer geeigneten Vergussmasse erfolgen. Wie vorangehend erläutert ist darauf zu achten, dass der Akku selbst nicht komplett vergossen wird.

In einer vierten Ausführungsform können lediglich die elektronischen Komponenten ohne die wiederaufladbare Batterie verklebt, verspritzt oder vergossen werden. Die elektronischen Komponenten können hier und vorangehend die Antenne umfassen. Die wiederaufladbare Batterie kann in dieser Ausführungsform separat hinzugefügt werden.

In einer fünften Ausführungsform kann der Akkupack als Foliengehäuse ausgeführt sein. Dabei kann die Folie in Form einer stabilen Klebefolie, z.B. Label oder eines Schrumpfschlauchs ausgeführt sein, der nach Anbringen beispielsweise mittels Wärmeeinwirkung in Form gebracht wird. Weiterhin kann er als ein in eine Form gezogenes Folienteil evtl. mit einer stabilisierenden Metallschicht integriert im Folienverbund ausgeformt sein.

In einer sechsten Ausführungsform ist eine Verbindung der vorangehend erläuterten Techniken denkbar. Dabei bietet sich insbesondere eine Kombination eines teilweisen Verklebens, Verspritzens oder Vergießens mit einer Folientechnik für einen anderen Teil des Gehäuses an, der nicht mittels Verkleben, Verspritzen oder Vergießen ausgeformt wird. Bevorzugt bietet es sich an, die elektrischen Komponenten zu verkleben, verspritzen oder vergießen, den gesamten Akkupack dann jedoch in einer Folientechnik aufzubauen.

Ergänzend kann anstelle eines Akkupacks auch ein Batteriefach nach den voran genannten Techniken und in Form eines wie vorangehend erläutert ausgeführten Akkupacks ausgeführt sein. Ein solches Batteriefach kann anstelle des Akkupacks in das batteriebetriebene Gerät, beispielsweise Hörinstrument, eingesetzt werden. Es dient insofern als Wechselpack, und kann einen wiederaufladbaren oder nicht wiederaufladbaren Energiespeicher, z.B. eine herkömmliche primäre Zink-Luft-Zelle, tragen. Dadurch kann eine herkömmliche Batterie anstelle eines wie vorangehend erläutert ausgeführten Akkupacks in ein Batteriefach eingesetzt werden, dessen Form an den Akkupack und nicht an die herkömmliche Batterie angepasst ist. Dadurch steht als Notfalllösung das Verwenden einer herkömmlichen Batterie zur Verfügung, falls der Akkupack beispielsweise leer oder defekt sein sollte. Bei Bedarf kann ein solches einsetzbares Batteriefach eine Nutzsignalelektronik umfassen, falls die Spannung der Batterie auf die erforderliche Betriebsspannung des batteriebetriebenen Geräts angepasst werden muss.

In **Figur 20** ist ein wie vorangehend erläutert ausgeführter Akkupack schematisch in Draufsicht dargestellt. Über der wiederaufladbaren Batterie 58 ist eine Antenne 57 angeordnet, die als Spule ausgeführt ist. Die wiederaufladbare Batterie 58 weist einen annähernd zylindrischen Querschnitt auf, während die Antenne 57 einen geringfügig kleineren bzw. abweichenden Querschnitt aufweist, so dass in der Fläche der Antenne 57 und über der Batterie 58 zusätzlich ein Batteriekontakt 54 Platz findet. Weiter können flächig neben der Antenne zusätzlich auch Antennenkontakte angeordnet sein.

Damit ist vermieden, dass die Batteriekontakte 54 und gegebenenfalls auch die Antennenkontakte über oder unter der Antenne 57 angeordnet werden müssen. Gleichzeitig ist vermieden, dass die Batteriekontakte 54 und gegebenenfalls such die Antennenkontakte um eine Kante der Batterie 58 herumgeführt werden müssen, was fertigungstechnisch problematisch wäre und mit der an der Batterie 58 seitlich angeordneten Isolierung der Batterie in Konflikt geraten könnte. Durch die flächige Anordnung von Antenne 57 und Batteriekontakten 54 und gegebenenfalls auch Antennenkontakten wird eine geringere Bauhöhe des Akkupacks und somit eine höhere Integration der Komponenten erreicht.

In der Abbildung rechter Hand weist der Akkupack einen oben angeordneten Raum auf, der nicht von der Batterie 58 ausgefüllt ist. Dieser freie Raum wird für die Nutzsignalkontakte 53 bzw. den hierfür vorgesehenen Stecker genutzt. Ein entsprechender freier Raum ist unten angeordnet, in dem die elektronischen Komponenten, beispielsweise Ladeelektronik, Schutzschaltung, Nutzsignalelektronik und Mikrocontroller angeordnet sind.

Durch die Anordnung der Nutzsignalkontakte 53 sowie der Elektronik 56 seitlich neben der Batterie 58 ist eine optimale Raumausnutzung möglich, ohne dass die Höhe des Akkupacks erhöht würde. Die Verbindung der Antenne 57 bzw. der Antennenkontakte 54 mit der Elektronik 56 erfolgt dabei über einen Draht 55, der problemlos um die Kante und über die seitenständige Isolierung der wiederaufladbaren Batterie 58 gelegt werden kann.

Ein Grundgedanke der Erfindung lässt sich wie folgt zusammenfassen: Die Aufgabe der Erfindung besteht darin, eine Energieversorgung für batteriebetriebene Geräte, beispielsweise Hörinstrumente, anzugeben, die auf einer wiederaufladbaren Batterie basiert und eine geringe Baugröße bei gleichzeitig hoher Energiedichte aufweist. Ein Grundgedanke der Erfindung besteht in einem Akkupack (1,2,3,4,5,6,14), umfassend mindestens eine wiederaufladbare Batteriezelle, eine Ladeelektronik (50) zum Aufladen der mindestens einen Batteriezelle, eine Nutzsignalelektronik (49) zum Erzeugen eines Nutzsignals, mindestens zwei Nutzsignalkontakte (21,53) zum Abgeben des Nutzsignals, und eine Kapselung (25,60) zum Schutz gegen das Eindringen von Feuchtigkeit und Verunreinigungen. Die Nutzsignalelektronik (49) transformiert eine Ausgangsspannung der Batteriezelle in eine oder mehrere vorbestimmte Nutzspannung(en), welche durch zwei bzw. mehrere Nutzsignalkontakte (21,53) außerhalb der Kapselung (25,60) verfügbar gemacht wird. Die Transformation der Nutzspannung durch die Nutzsignalelektronik ermöglicht es, beliebige Batteriesysteme mit unterschiedlichsten Batterie- bzw. Zell-Spannungen einzusetzen, da die Nutzsignalelektronik unabhängig davon die erforderliche Betriebsspannung erzeugen kann. Damit können beispielsweise Li-Ionen-Batteriesysteme, die in der Regel mit 3,7 Volt Spannung arbeiten, auch in Hörinstrumenten eingesetzt werden, die in der Regel mit einer Betriebsspannung von 1,2 Volt arbeiten. Die Kapselung des Akkupacks ist in diesem Zusammenhang besonders vorteilhaft, da erfahrungsgemäß die Korrosions-Neigung mit steigender Spannung überproportional zunimmt. Durch die Kapselung wird es ermöglicht, Komponenten mit erhöhter Betriebsspannung vollständig zu kapseln.

## Patentansprüche

1. Akkupack (1,2,3,4,5,6,14), umfassend mindestens eine wiederaufladbare Batteriezelle, eine Ladeelektronik (50) zum Aufladen der mindestens einen Batteriezelle, eine Nutzsignalelektronik (49) zum Erzeugen eines Nutzsignals, mindestens zwei Nutzsignalkontakte (21,53) zum Abgeben des Nutzsignals, und eine Kapselung (25,60) zum Schutz gegen das Eindringen von Feuchtigkeit und Verunreinigungen, wobei die Nutzsignalelektronik (49) eine Ausgangsspannung der Batteriezelle in eine vorbestimmte Nutzspannung transformiert, und wobei die Nutzspannung durch die zwei Nutzsignalkontakte (21,53) außerhalb der Kapselung (25,60) verfügbar gemacht wird,
**dadurch gekennzeichnet, dass** der Akkupack (1,2,3,4,5,6,14) eine flächig erstreckte Antenne (20,57) zum kabellosen Energieempfang umfasst, dass die mindestens eine Batteriezelle flächig erstreckt ist, und dass die Antenne (20,57) und die mindestens eine Batteriezelle in einer Richtung senkrecht zur Erstreckungsfläche der Antenne (20,57) übereinander angeordnet sind.

2. Akkupack (1,2,3,4,5,6,14) nach Anspruch 1,
**dadurch gekennzeichnet, dass** die mindestens eine Batteriezelle, die Ladeelektronik (50) und die Nutzsignalelektronik (49) zur Einhaltung einer vorbestimmten maximalen Höhe des Akkupacks (1,2,3,4,5,6,14) in einer Fläche nebeneinander angeordnet sind.

3. Akkupack (1,2,3,4,5,6,14) nach einem der vorhergehenden Ansprüche,
**dadurch gekennzeichnet, dass** die Antenne (20,57) mittels elektrischer Antennenkontakte mit der Ladeelektronik (50) verbunden ist, und dass die elektrischen Antennenkontakte und die Antenne (20,57) in einer Fläche nebeneinander angeordnet sind.

4. Akkupack (1,2,3,4,5,6,14) nach einem der vorhergehenden Ansprüche,
**dadurch gekennzeichnet, dass** die mindestens eine wiederaufladbare Batteriezelle mittels elektrischer Batteriekontakte (54) mit der Ladeelektronik (50) verbunden ist, und dass die elektrischen Batteriekontakte (54) und die Antenne (20,57) in einer Fläche nebeneinander angeordnet sind.

5. Akkupack (1,2,3,4,5,6,14) nach einem der vorhergehenden Ansprüche,
**dadurch gekennzeichnet, dass** er eine Abschirmung gegen elektromagnetische Signale umfasst, die einen flächig erstreckten Abschnitt (22) aufweist, der zwischen der Antenne (20,57) und der mindestens einen Batteriezelle angeordnet ist, und einen daran anschließenden, quer zur flächigen Erstreckung erstreckten Abschnitt, der seitlich um die mindestens eine Batteriezelle herum angeordnet ist.

6. Akkupack (1,2,3,4,5,6,14) nach einem der vorhergehenden Ansprüche,
**dadurch gekennzeichnet, dass** er mindestens teilweise in MID-Technik aufgebaut ist.

## Claims

1. Rechargeable battery pack (1, 2, 3, 4, 5, 6, 14) comprising at least one rechargeable battery cell, a charging electronics system (50) for charging the at least one battery cell, a useful signal electronics system (49) for generating a useful signal, at least two useful signal contacts (21, 53) for outputting the useful signal, and an encapsulation (25, 60) for protecting against the ingress of moisture and dirt, wherein the useful signal electronics system (49) transforms an output voltage from the battery cell into a predetermined useful voltage, and wherein the useful voltage is made available by the two useful signal contacts (21, 53) outside the encapsulation (25, 60), **characterized in that** the rechargeable battery pack (1, 2, 3, 4, 5, 6, 14) comprises an antenna (20, 57) of flat extent for cable-free energy reception, **in that** the at least one battery cell is of flat extent, and **in that** the antenna (20, 57) and the at least one battery cell are arranged one above the other in a direction perpendicular to the area of extent of the antenna (20, 57).

2. Rechargeable battery pack (1, 2, 3, 4, 5, 6, 14) according to Claim 1, **characterized in that** the at least one battery cell, the charging electronics system (50) and the useful signal electronics system (49) are arranged next to one another in one area in order to maintain a predetermined maximum height of the rechargeable battery pack (1, 2, 3, 4, 5, 6, 14).

3. Rechargeable battery pack (1, 2, 3, 4, 5, 6, 14) according to one of the preceding claims, **characterized in that** the antenna (20, 57) is connected to the charging electronics system (50) by means of electrical antenna contacts, and **in that** the electrical antenna contacts and the antenna (20, 57) are arranged next to one another in one area.

4. Rechargeable battery pack (1, 2, 3, 4, 5, 6, 14) according to one of the preceding claims, **characterized in that** the at least one rechargeable battery cell is connected to the charging electronics system (50) by means of electrical battery contacts (54), and **in that** the electrical battery contacts (54) and the antenna (20, 57) are arranged next to one another in one area.

5. Rechargeable battery pack (1, 2, 3, 4, 5, 6, 14) according to one of the preceding claims, **characterized in that** it comprises a shield against electromagnetic signals, which shield has a section (22) of flat extent, which section is arranged between the antenna (20, 57) and the at least one battery cell, and an adjoining section which extends transverse to the flat extent and is arranged laterally around the at least one battery cell.

6. Rechargeable battery pack (1, 2, 3, 4, 5, 6, 14) according to one of the preceding claims, **characterized in that** it is at least partially constructed using MID technology.

## Revendications

1. Bloc-batterie (1, 2, 3, 4, 5, 6, 14), comprenant au moins un élément de batterie rechargeable, une électronique de charge (50) destinée à charger l'au moins un élément de batterie, une électronique de signal utile (49) destinée à générer un signal utile, au moins deux contacts de signal utile (21, 53) destinés à délivrer le signal utile, et un encapsulage (25, 60) destiné à la protection contre l'introduction d'humidité et d'impuretés, dans lequel l'électronique de signal utile (49) transforme une tension de sortie de l'élément de batterie en une tension utile prédéterminée, et dans lequel la tension utile est mise à disposition par les deux contacts de signal utile (21, 53) à l'extérieur de l'encapsulage (25, 60),
**caractérisé en ce que** le bloc-batterie (1, 2, 3, 4, 5, 6, 14) comprend une antenne plane (20, 57) destinée à recevoir de l'énergie sans fil, **en ce que** l'au moins un élément de batterie est plan et **en ce que** l'antenne (20, 57) et l'au moins un élément de batterie sont disposés l'un sur l'autre dans une direction perpendiculaire à la surface d'extension de l'antenne (20, 57).

2. Bloc-batterie (1, 2, 3, 4, 5, 6, 14) selon la revendication 1,
**caractérisé en ce que** l'au moins un élément de batterie, l'électronique de charge (50) et l'électronique de signal utile (49) sont disposés côte à côte dans une surface afin de respecter une hauteur maximale prédéterminée du bloc-batterie (1, 2, 3, 4, 5, 6, 14).

3. Bloc-batterie (1, 2, 3, 4, 5, 6, 14) selon l'une quelconque des revendications précédentes,
**caractérisé en ce que** l'antenne (20, 57) est connectée à l'électronique de charge (50) par l'intermédiaire de contacts d'antenne électriques et **en ce que** les contacts d'antenne électriques et l'antenne (20, 57) sont disposés côte à côte dans une surface.

4. Bloc-batterie (1, 2, 3, 4, 5, 6, 14) selon l'une quelconque des revendications précédentes,
**caractérisé en ce que** l'au moins un élément de batterie rechargeable est connecté à l'électronique de charge (50) par l'intermédiaire de contacts de batterie électriques (54), et **en ce que** les contacts de batterie électriques (54) et l'antenne (20, 57) sont disposés côte à côte dans une surface.

5. Bloc-batterie (1, 2, 3, 4, 5, 6, 14) selon l'une quelconque des revendications précédentes,
**caractérisé en ce qu'**il comprend un blindage contre les signaux électromagnétiques, qui présente une partie (22) s'étendant dans un plan, laquelle partie est disposée entre l'antenne (20, 57) et l'au moins un élément de batterie, et une partie se raccordant à celui-ci et s'étendant transversalement à ladite extension plane, qui est disposée latéralement autour de l'au moins un élément de batterie.

6. Bloc-batterie (1, 2, 3, 4, 5, 6, 14) selon l'une quelconque des revendications précédentes,
**caractérisé en ce qu'**il est réalisé au moins partiellement selon la technique MID.
